Europäisches Patentamt

European Patent Office

Office européen des brevets

(11) Publication number: **0 173 508 B1**

# EUROPEAN PATENT SPECIFICATION

(45) Date of publication of patent specification: **13.02.91**

(51) Int. Cl.⁵: **H04L 12/44,** H04B 3/20, H04B 10/12

(21) Application number: **85305719.8**

(22) Date of filing: **13.08.85**

(54) **Local area network.**

(30) Priority: **31.08.84 US 646184**

(43) Date of publication of application:
**05.03.86 Bulletin 86/10**

(45) Publication of the grant of the patent:
**13.02.91 Bulletin 91/07**

(84) Designated Contracting States:
**DE GB IT**

(56) References cited:
**EP-A- 0 029 502**
**US-A- 4 451 827**

**PATENT ABSTRACTS OF JAPAN, vol. 8, no. 49 (E-230)[1486], 6th March 1984; & JP-A-58 201 439 (MITSUBISHI DENKI K.K.) 24-11-1983**

(73) Proprietor: **XEROX CORPORATION**
**Xerox Square - 020**
**Rochester New York 14644(US)**

(72) Inventor: **Gunning, William F.**
**12930 La Cresta Road**
**Los Altos California 94022(US)**
Inventor: **Rawson, Eric G.**
**20887 Maureen Way**
**Saratoga California 95070(US)**
Inventor: **Schmidt, Ronald V.**
**242 Corte Madera Road**
**Portola Valley California 94025(US)**

(74) Representative: **Weatherald, Keith Baynes et al**
**Rank Xerox Patent Department Albion House, 55 New Oxford Street London WC1A 1BS(GB)**

## Description

This invention related to local area networks (LANs) and, more particularly, to hierarchical star network architectures which are especially well suited for fibre optic LANs utilizing statistical contention network control procedures.

A local area network comprising a plurality of nodal units interconnected in an inverted-tree hierarchy by a network of duplex data channels, i.e. at least two multi-part star-configured nodes coupled to host terminals by bidirectional transmission paths, is disclosed in EP-A-0 029 502.

Fiber optic LANs offer significant technical advantages over LANs having metallic transmission lines (e. g., twisted pairs or coaxial cables). including compatability with narrower gauge cable, relative freedom from potentially troublesome ground loop currents, substantial immunity to electromagnetic interference, and increased security against electronic eavesdropping. Nevertheless, they have been slow to achieve widespread commercial acceptance. at least in part because of the problems that have been encountered in attempting to develop a low loss fiber optic tap, such as seems to be required for most any commercially attractive application of fiber optics to conventional linear LAN topologies. A suitable tap may evolve from the on-going development work on that component, but the current state of the fiber optic art suggests that an alternative topology is required at the present time. Indeed, while fiber optic technology has been identified as a promising concept for future broadband, high speed LANs, it has had limited appeal for the more moderate data rate (e. g., 3Mbps-10Mbps) networks which currently dominate the potential market.

Others have proposed hierarchical star architectures for fiber optic LANs. See, for example, Husain, A. and Cook, S. D., "Fiber Optic Architectures for Local Area Networks," Technical Contribution, Honeywell Technology Strategy Center, October 1982. Star topologies are commonly specified for fiber optic LANs because they obviate the need for a low loss fiber optic tap. Furthermore, it has been recognized that the inherent modularity of a hierarchical star architecture is beneficial, especially for LANs which are likely to be expanded or reconfigured as necessary to accomodate additional hosts and/or the relocation of existing hosts.

However, it appears that the significance of the hierarchical star LAN architecture may not have been fully appreciated or understood. An important, but seemingly overlooked advantage of such an architecture is that it may be utilized to reduce the cost of the LAN, not only by decreasing the amount of cable required, but also by limiting the expenses associated with the initial installation of a network and with any subsequent expansion or modification of such a network.

Statistical contention control is a preferred technique for resolving competing demands for access to a LAN. It has gained widespread acceptance in so-called CSMA/CD ( $\underline{C}$ arrier $\underline{S}$ ense $\underline{M}$ ultiple $\underline{A}$ ccess with $\underline{C}$ ollision $\underline{D}$ etection) networks. Characteristically, a statistical contention control process, such as CSMA/CD, gives each terminal or host on the network equal access to the shared network facilities on a contention basis and resolves the "collisions" that occur when two or more hosts compete for control of the network by resetting those hosts to retry at randomly selected later times. US-A- 4 063 220 contains a more detailed description of a basic statistical contention network control process.

In accordance with the present invention, a hierarchical star configured LAN has N-channel star repeaters for providing a hierarchy of repeatered communication links between host terminals at the lowest level of the network. Hosts within a predetermined limited distance of one another advantageously are clustered to form a mini-LAN which operates under the control of a M-port active star cluster controller, but communications between more distantly separated hosts are repeatered one or more times to maintain a suitably high signal-to-noise ratio and, if necessary, re-timed to preserve the proper signal timing. The repeaters selectively propogate non-redundant data and status signals (collectively referred to hereinafter as "information") to all levels of the network, while preventing the circulation of redundant information (i.e., "return echoes"). To simplify the echo suppression, the repeaters preferably are distributed, such that each repeater channel comprises two half repeaters for making the redundancy determinations on a node-by-node basis. The number of ports or channels required for any cluster controller or repeater is determined by the number of hosts or network nodes, respectively, which are being serviced thereby and can be more or less arbitrarily increased or decreased as necessary to facilitate expansion or reconfiguration of the LAN.

A hierarchical star network architecture offers specific advantages for fiber optic LANs, such as the ability to network a far greater number of hosts than a linear network could accomodate given the current state of the fiber optic tap art, but the architecture is not limited to fiber optics. Furthermore, while statistical contention control advantageously is used to resolve competing demands for access to the network, the broader aspects of this invention are not dependent thereon.

Further advantages and features of this invention will become apparent when the following detailed description is read in conjunction with the attached drawings, in which:

Figure 1 is block diagram of a relatively simple hierarchical star LAN which is constructed in accordance with the present invention;

Figure 2 is a basic block diagram of a cluster controller having a half repeater module for extended access to a hierarchical LAN in keeping with this invention;

Figure 3 is a basic block diagram of an intermediate or group-level controller for a hierarchical LAN embodying the present invention;

Figure 4 is a more detailed block diagram of a suitable host transceiver for the LAN of Fig. 1;

Figures 5A-5C are timing diagrams illustrating typical encoded data, idle and collision signals, respectively, which the host transceiver of Fig. 4 may receive under various operating conditions of a LAN having statistical contention control;

Figure 6 is a more detailed block diagram of a suitable control unit module for the cluster controller shown in Fig. 2; and

Figure 7 is a more detailed block diagram of a suitable half repeater module for the central controller of figure 1, the cluster controller of Figure 2, and the group-level controller of Figure 3.

## 1. Architectural Overview

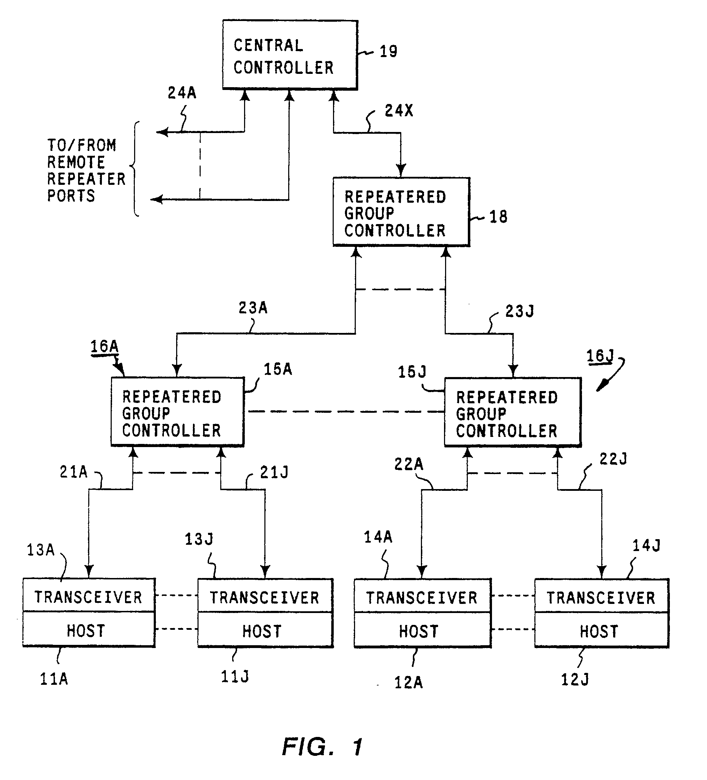

Turning now to the drawings, and at this point especially to Figure 1, there is a LAN having a hierarchical star architecture for supporting communications among a plurality of host terminals 11a-11j,... and 12a-12j. As illustrated, the hosts 11a11j, ... and 12a-12j have transceivers 13a-13j, ... and 14a-14j, respectively, so that each of them may transmit and receive data via the LAN.

A hierarchical star LAN conventionally is relatively easy to expand and reconfigure as required to meet the needs of a growing and changing user community. However, increased architectural flexibility is provided in accordance with this invention because there are M-port cluster controllers 15a-15j for networking neighboring hosts 11a-11j, ... and 12a-12j, respectively, and one or more N-channel repeaters for linking the cluster controllers 15a-15j. In the absence of the repeaters, the cluster controllers 15a-15j effectively establish independent, active star mini-LANs 16a-16j for the hosts 11a-11j, ... and 12a-12j, respectively. The repeaters, in turn, link or network the cluster controllers 15a-15j, thereby merging the mini-LANs 16a-16j into an extended, hierarchical star LAN, such as shown.

In keeping with an important feature of this invention, distributed repeaters (described in more detail hereinbelow) provide bidirectional repeatered communication links for selectively transmitting non-redundant data and control signals (i.e. "information") between the nodes of the extended or multi-node LAN. As used herein, "node" means a junction which is common to two or more branches of a network. For example, the mini-LANs 16a-16j are "single node" LANs, while the hierarachical star LAN is a "multi-node" LAN. With that definition in mind, it will be understood that any two nodes at the same level or different levels of the network can be linked by coupling a half repeater at one of the nodes to another half repeater at the other node, thereby providing substantial topological freedom for the network designer. This, of course, promotes an orderly growth of the LAN from, say, a relatively small installation of one or more single node mini-LANs 16a-16j to a more comprehensive network having a plurality of interconnected nodes, such as illustrated by the repeatered cluster controllers 15a-15j, a repeatered group controller 18, and a central controller 19.

The illustrated embodiment utilizes a statistical contention network control procedure for allocating the LAN to the data transmission requirements of the several hosts 11a-11j,... and 12a-12j. In other words, the hosts 11a-11j, ... and 12a-12j contend for control of the LAN as required to satisfy their individual data transmission needs, but are subject to being reset whenever two or more of them happen to compete for control, thereby resolving that conflict while enabling the competing hosts to later complete their data transmission tasks. To that end, in accordance with one of the more detailed features of this invention, there are suitable means (described hereinbelow) at each of the network nodes 15a-15j, 18 and 19 for detecting and signalling "collisions" on a distributed basis, so that the network control logic does not have to be modified if the LAN is expanded or reconfigured.

To carry out the statistical contention network process, more or less conventional provision (not shown) is made at each of the hosts 11a-11j, ... and 12a-12j for preserving all data from any transmission that is aborted because of a collision, so that such data may be recovered and re-transmitted after the contention conflict has been resolved Typically, the hosts 11a-11j, ... and 12a-12j include means (also not shown) for assembling data into fixed or variable length packets for transmission in accordance with, say, a standard CSMA/CD protocol. Thus, in keeping with accepted practices, the diameter of the LAN (i. e., its longest data path) is limited so that the round trip transit time for a signal from any host is less than the minimum allowable time for a single packet (i. e., "the minimum permissible packet time"), thereby providing an

3

adequate time allowance for ensuring that all hosts which happen to be involved in a collision occurring anywhere within the LAN are reset within a single minimum permissible packet time. That enables the hosts 11a-11j, ... and 12a-12j to preserve the data from their aborted transmissions, even though the existence of the collision may be first detected at any one of the network nodes 15a-15j, 18 and 19 and may involve competing transmissions by any two or more of the hosts 11a-11j, ... and 12a-12j.

Fiber optic cable is a preferred transmission medium for the LAN because it characteristically has a significantly broader bandwidth than ordinary metallic transmission medium, such as coaxial cable. Due to the superior frequency response of fiber optic cable, the collision signal may be propagated and detected relatively rapidly, thereby enabling the hosts 11a-11j, ... and 12a-12j to respond relatively promptly to the existence of a collision. Consequently, the fiber optic LAN may have a greater diameter and/or operate with a shorter minimum permissible packet time than its metallic transmission line counterpart,

In accordance with one of the more specific features of this invention, it has been recognized that a hierarchical star architecture is particularly well suited for fiber optic LANs if a maximum run length limit of 100 m. or so is specified for the lowest level or first tier cables 21a-21j, ... and 22a-22j (as illustrated, the cables 21a-21j, ... and 22a-22j are the fiber optic links between the host tranceivers 13a-13j, ... and 14a-14j and the cluster controllers 15a-15j, respectively). Such a specification not only is consistent with more or less minimizing the amount of cable required to form the network, but also is consistent with using relatively inexpensive fiber optic cable and associated optical sources and detectors at the lowest level of the network, where there typically are a relatively large number of links. A similar run length limit could be specified for the cables 23a-23j and 24a-24j at the upper levels of the LAN, but the cost of the additional repeaters which such a specification might require is likely to outweigh the savings in cable and individual component costs. Indeed, as a general rule, it is most economical to lay out the LAN more or less in accordance with the wiring rules for conventional in-house telephone distribution networks. That approach is especially attractive from a cost viewpoint if-the LAN actually shares equipment storage facilities and wiring routes with such a telephone network.

## II. The Network Nodes

### A. The Cluster Controllers

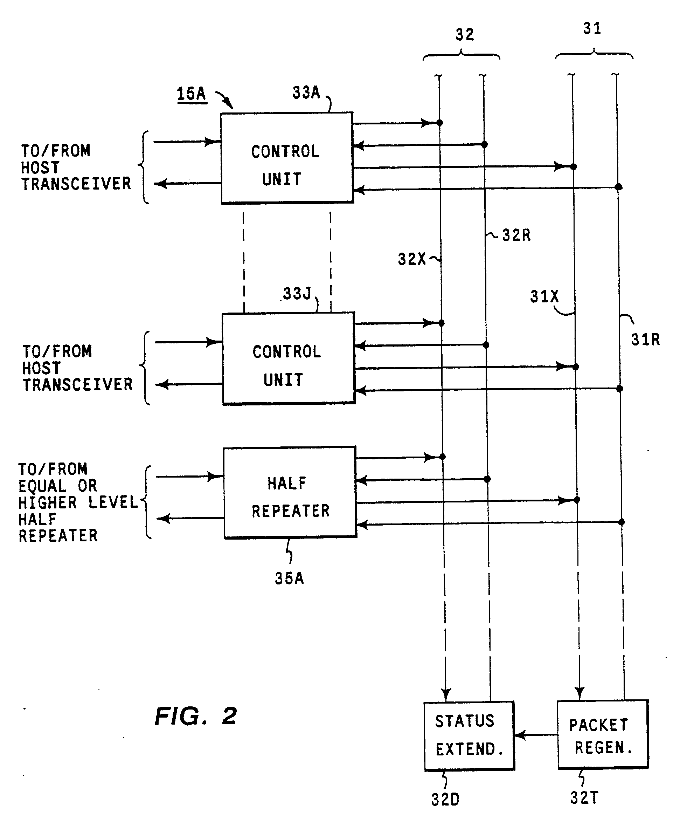

Referring to Fig. 2, a typical cluster controller, such as the controller 15a, comprises a dual segment backplane data bus 31, a dual segment backplane status bus 32, and one or more control units 33a-33j for transferring data to and from the hosts 11a-11j (Fig. 1), respectively. In practice, a packet regenerator 31t may be coupled between the receive segment 31r and the transmit segment 31x of the data bus 31 to regenerate the data. As will be appreciated, such packet regeneration may introduce a significant delay into the data flow, so a status extender 32d may be coupled between the receive segment 32r and the transmit segment 32x of the status bus 32 to ensure that the trailing edge of the data status signal on the bus segment 32x is time synchronized with the conclusion of the regenerated data flow through the bus segment 31x. Hence, it will be understood that the segmentation of the data bus 31 and the status bus 32 may be significant, even though it is de-emphasized hereinafter to avoid excessive detail. Conversely, should it be found that the data regeneration process is unnecessary, the packet regenerator 31t and the status extender 32d should be omitted, so that the only remaining potential cause of a total failure of the cluster controller 15a is an interruption of its power supply (not shown). Highly reliable, redundant power supplies are available, so the risk of avoiding the data regeneration process should be carefully assessed, especially at the cluster controller 15a and the other lower level nodes of the network, where such risk is likely to be relatively low.

All data generated by and/or transmitted to the hosts 11a-11j is transferred via the data bus 31. To that end, the control units 33a-33j not only give the data bus 31 unconditional access to any data generated by the hosts 11a-11j, respectively, but also control the flow of data from the data bus 31 to the hosts 11a-11j, respectively, in response to a network control signal which is carried by the status bus 32. Therefore, the cluster controller 15a may be more generally described as having M-ports 33a-33j to provide access control for the M-hosts 11a-11j; where M = 1,2, ... m, and m = any practical limit that may exist on the maximum number of hosts a single controller is capable of servicing. While it may be assumed for purposes of this disclosure that the controller 15a can accommodate an arbitrary number of hosts 11a-11j, it should be understood that there usually is a finite limit in practice. For example, the practical limit may be determined by the amount of address space a given communications protocol allots to the unique identification of the hosts 11a-11j or by the maximum permissible capacitive loading of the data bus 31 and/or the status bus 32, but such considerations are beyond the scope of this invention.

To provide a statistical contention network control procedure for the mini-LAN 16a, the control units 33a-33j continuously monitor the outputs of the transceivers 13a-13j, respectively, to determine whether the hosts 11a-11j are transmitting data or not. In this particular embodiment, the transceivers 13a-13j are equipped to transmit relatively low frequency idle signals in the absence of data from the hosts 11a-11j, respectively, but such affirmative idle signalling is not essential. Indeed, regardless of whether there is affirmative idle signalling or not, the control units 33a-33j generate internal binary control signals ("idle" or "data") in response to the signals received from the transceivers 13a-13j, respectively, and employ those control signals (1) to gate data transmitted by the hosts 11a-11j through to the data bus 31 and (2) to maintain an appropriate network control signal ("idle", "data" or "collision") on the status bus 32.

More particularly, the internal control signals generated by the control units 33a-33j are "local status signals" which collectively determine the network control signal or "global status signal" appearing on the status bus 32, whereby (i) a global "idle" status is signalled if all local status signals are at an idle level, (ii) a global "data" status is signalled if only one local status signal is at a data level, and (iii) a global "collision" status is signalled if two or more of the local status signals are at a data level. In other words, the global status signal is logically related to the local status signals in accordance with the following rules:

| Local Status | Global Status |
|---|---|
| All idle | Idle |
| One data, all others idle | Data |
| Two or more data | Collision |

Although the mini-LAN 16a may be operated independently, if desired, under the exclusive control of the cluster controller 15a as described above, it is easily merged into an extended or multi-node LAN, such as shown in Fig. 1, thereby enabling the hosts 11a-11j to communicate not only with each other, but also with the more remote hosts 12a-12j. Unlike the mini-LAN 16a, the extended LAN contains a plurality of nodes 15a-15j, 18 and 19 which are jointly responsible for the network control.

As previously mentioned, the hierarchical star architecture of the extended LAN enables the network designer to consider the cost savings and/or performance improvements that may be realized when one or more tiers of higher level nodes, such as the group controller 18 and the central controller 19, are used to interconnect the cluster controllers 15a-15j. Nevertheless, it should be understood that such higher level nodes are not required for all conceivable extended network embodiments of the present invention. Thus, to re-emphasize the network design flexibility provided by this invention, it is noted that each of the cluster controllers 15a-15j includes a half repeater, such as shown at 35a in Fig. 2, whereby the half repeaters of any two of the controllers 15a-15j may be interconnected to form a dual node extended LAN, without the intervention of any higher level node.

B. The Higher Level Nodes

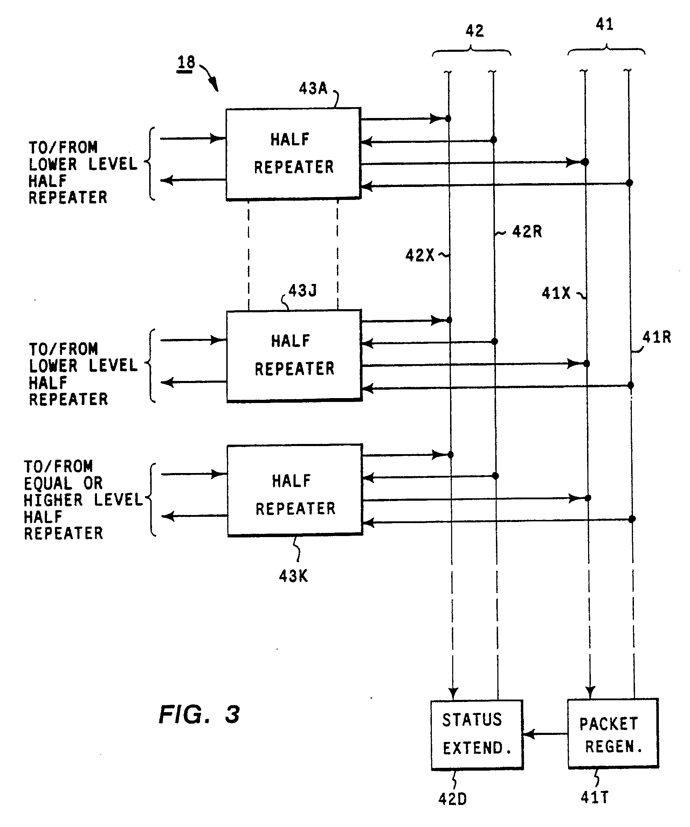

As shown in Fig. 3, each of the higher level nodes of the network, such as the group controller 18, has a dual segment backplane data bus 41, a dual segment backplane status bus 42, and one or more half repeaters 43a-43k. Once again, a packet regenerator 41t may be coupled between the receive segment 41r and the transmit segment 41x of the data bus 41 to regenerate the data, and a status extender 42d may be coupled between the receive segment 42r and the transmit segment 42x of the status bus 42 to synchronize the data status signal with the regenerated data flow as previously described. As before, however, general references will be used to identify the data bus 41 and the status bus 42 in the interest of simplifying this disclosure.

Returning for a moment to Fig. 1, it will be understood that the group controller 18 is an intermediate level node. Accordingly, it includes an "up directed" half repeater 43k (Fig. 3) which is coupled, as at 24k (Fig. 1), to a half repeater (not shown) within the central controller 19, so that there is a bidirectional repeatered link between the group controller data bus 41 and the central controller data bus (also not shown). All of the other half repeaters 43a-43j of the group controller 18 are coupled to half repeaters within equal or lower level nodes of the LAN. More particularly, to accommodate the topology of the hierarchical LAN shown in Fig. 1, the half repeaters 43a-43j are coupled to half repeaters within the cluster controllers 15a-15j, respectively. For example, there is a bidirectional repeatered link between the cluster controller data bus 31 (Fig. 2) and the group controller data bus 41 (Fig.3) because the half repeater 35a (Fig. 2) is coupled, as at 23a (Fig. 1), to the half repeater 43a (Fig.3). The central controller 19 is similar to the group controller 18, but it does not have any counterpart to the "up directed" half repeater 43k because it is not repeatered to any equal or higher level node of the LAN. Thus, it will be understood that the higher level nodes 18 and 19 combine with the half repeaters within the cluster controllers 15a-15j, such as the half repeater 35a, to define N-channel distributed repeaters, where N = 1, 2,... n, and n = any practical limit that may exist on the maximum allowable number of channels per node. Each channel of such a distributed repeater comprises a pair of linked half repeaters

Although a representative half repeater is described in additional detail hereinbelow, it is appropriate at this point to briefly consider the functional interaction of the half repeaters 35a (Fig. 2) and 43a (Fig. 3) from a network point of view because they are an example of a so-called distributed repeater channel. Generally stated, such a repeater channel (hereinafter referred to as a "distributed repeater") provides a bidirectional link for unidirectionally transferring data and network control signals from one node to another node of the LAN. All node-to-node transfers of data or collision signals are unidirectional because the propagation of redundant information would cause a potentially catastrophic failure of the network due to oscillation (i. e., a more or less continuous transfer of information back and forth between the network nodes). To that end, the half repeaters 35a and 43a include echo suppression logic (described hereinbelow) to prevent the circulation of redundant information. In the illustrated embodiment, the basic network control signal of interest is a collision signal which is propagated in lieu of data whenever a collision is detected, but that is only one example of a network control signal that might cause a catastrophic failure of the network if "return echoes" were not suppressed. As will be seen, a significant advantage of using distributed repeaters is that relatively straightforward logic may be employed in the half repeaters, such as 35a and 43a, to provide such echo suppression.

## III. Subsystems

The transceivers 13a-13j, ... and 14a-14j (Fig 1), the control units 33a-33j (Fig. 2), and the half repeaters 35a (Fig. 2) and 43a-43j (Fig. 3) are the basic subsystems for constructing a LAN of almost any complexity. They have been illustrated and described with reference to a relatively straightforward hierarchical architecture, but it should be evident that they also can accommodate hybrid hierarchical star configured network topologies. Such a hybrid network would have one or more hybrid nodes (not shown), thereby creating different levels of hierarchy for various hosts. For example, a hybrid node might include several control units 33a-33j and several half repeaters 43a-43j, such that it functions as a so-called cluster controller for one group of hosts and as a so-called higher level node for another group of hosts. Furthermore, while the architecture of the present invention lends itself to the use of fiber optic communication links as discussed hereinabove, it will be apparent that some fiber optic and some metallic communication links could be used. Indeed, for some topologies (most notably those in which all communication links are limited to a run length of less than approximately 100m - 200m), there may be a clear cost advantage to employing metallic transmission media (specifically, given the current state of the art, shielded twisted pair) throughout the network. Some minor modification of the collision signalling strategy probably would be required due to the less favourable dc transmission characteristics of such metallic transmission media, but such implementational variations would be more or less routine to one of ordinary skill in the art.

Therefore, to provide a more comprehensive understanding of the present invention, a representative transceiver 13a, a representative control unit 33a, and a representative half repeater 43a will be described in the context of a 10Mbps baseband fiber optic LAN having CSMA/CD access control, although that is only one of the many possible applications of this invention. To simplify the description, it will be assumed that all data is phase encoded at the 10Mbps bit rate (by means not shown) in accordance with a self-clocking code, such as a Manchester code, and that the encoded data are assembled into packets (by means also not shown) prior to transmission via the LAN. As will be appreciated, those assumptions are consistent with the use of a standard Ethernet packet format wherein each packet is preceded by a fixed length preamble and is composed of five successive fields in the following order: a fixed length destination address, a fixed length source address, a fixed length type field, a variable length data field of predetermined minimum and maximum length, and a fixed length frame check sequence, There is no need for describing that well known packet format in detail, but it should be noted that it inherently defines a minimum and maximum permissible packet time.

A. The Transceivers

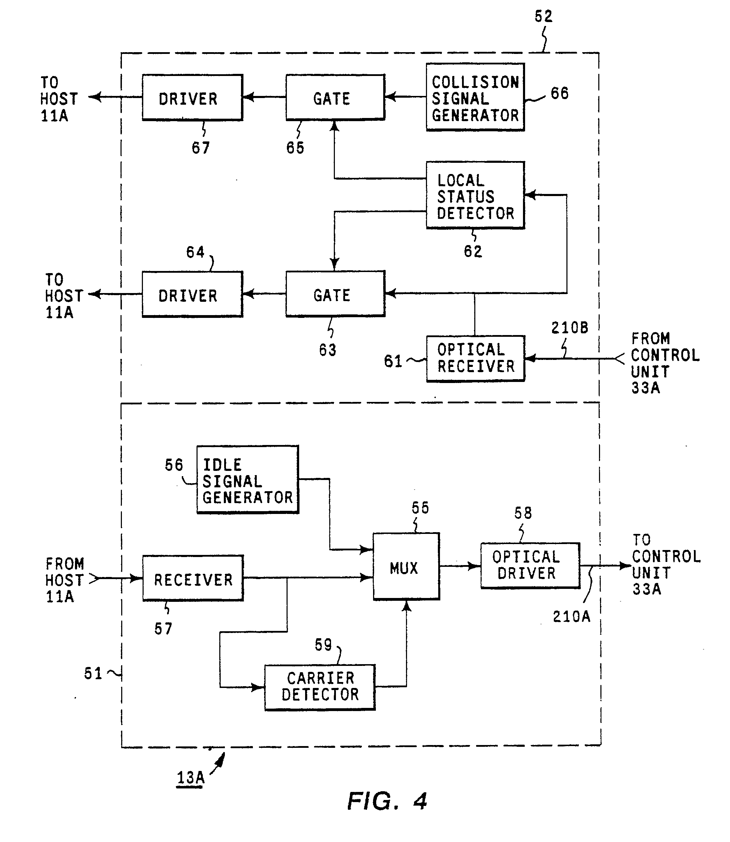

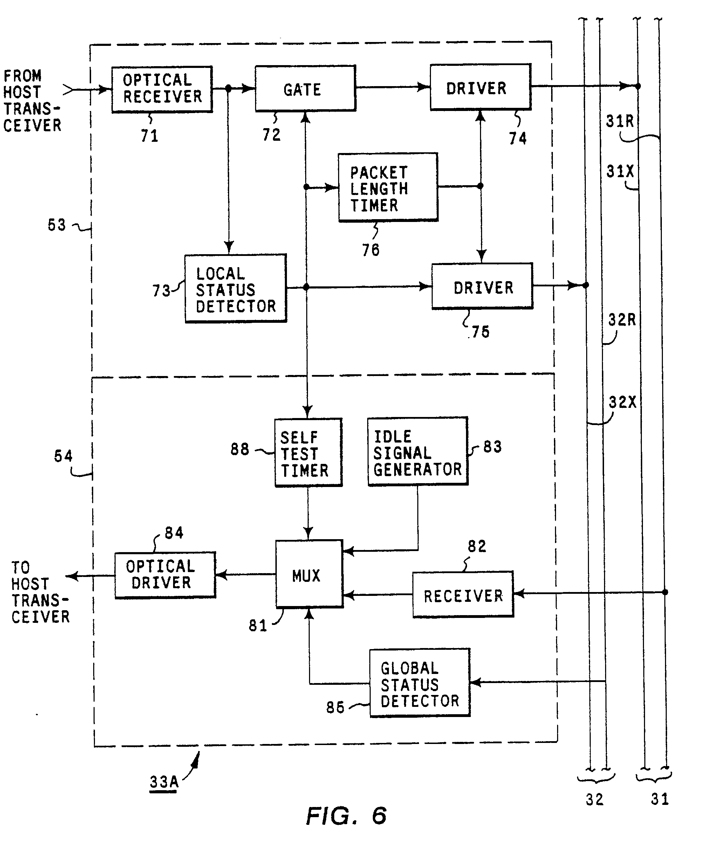

Turning to Figure 4, it will be seen that the transceiver 13a has a transmit channel 51 and a receive channel 52 which enable the host 11a (Figure 1) to transmit and receive data via the LAN. To support bidirectional communications between the transceiver 13a and the control unit 33a, the optical link 21a (Figure 1) comprises a pair of fiber optic cables 210a and 210b for coupling the transmit channel 51 and the receive channel 52 of the transceiver 13a to the receive channel 53 and the transmit channel 54, respectively, of the control unit 33a (Fig. 6). In keeping with standard CSMA/CD access control rules, the host 11a not only defers from transmitting until it determines that the LAN is idle, but also is subject to being reset for a brief period of time after it starts to transmit if a "collision" is detected at any node of the LAN. Due to inherent propagation delays, such collisions may occur, even if the LAN appears to be idle at the time a transmission is initiated.

As illustrated, the transmit channel 51 of the transceiver 13a transmits any packets generated by the host 11a and supplies an idle signal in the absence of such a packet. To that end, it comprises a multiplexer 55 for selectively coupling an idle signal generator 56 or a receiver 57 to an optical driver 58 under the control of a carrier detector 59. In operation, the receiver 57 detects and filters any signals appearing at the data output port of the host 11a, while the carrier detector 59 monitors the output of the receiver 57 to supply a control signal for selectively switching the multiplexer 55 so that an data packet or idle signal is applied to the optical driver 58 depending on whether the host 11a is transmitting or not, respectively. Given that the host 11a transmits at a predetermined bit rate (10Mbps), the carrier detector 59 suitably monitors the repetition rate of the digital signal transitions at the output of the receiver 57 to generate an appropriate control signal for the multiplexer 55. The optical driver 58, of course, converts the electrical signals it receives into corresponding optical signals for transmission to the control unit 33a via the fiber optic cable 210a

The control unit 33a transmits a packet, an idle signal, or a collision signal to the receive channel 52 of the transceiver 13 via the fiber optic cable 210b. An optical receiver 61 converts those signals into corresponding electrical signals and then applies them to the input of a local status detector 62 and to the input of a normally disabled gate 63. If a packet is being received, the status detector 62 enables the gate 63, thereby causing a driver 64 to apply the packet to the data input port of the host 11a. Alternatively, if a collision signal is being received, the status detector 62 enables another normally disabled gate 65, whereby a collision signal generator 66 is coupled to a driver 67 for applying a reset signal to a control port of the host 11a. Or, as still another alternative, if an idle signal is being received, the gates 63 and 65 are both disabled, thereby signalling the host 11a that the LAN is at least conditionally available for the transmission of a packet. Of course, whenever the LAN is "conditionally available," the host 11a is free to transmit a packet, even though it may be reset subsequently if a collision occurs.

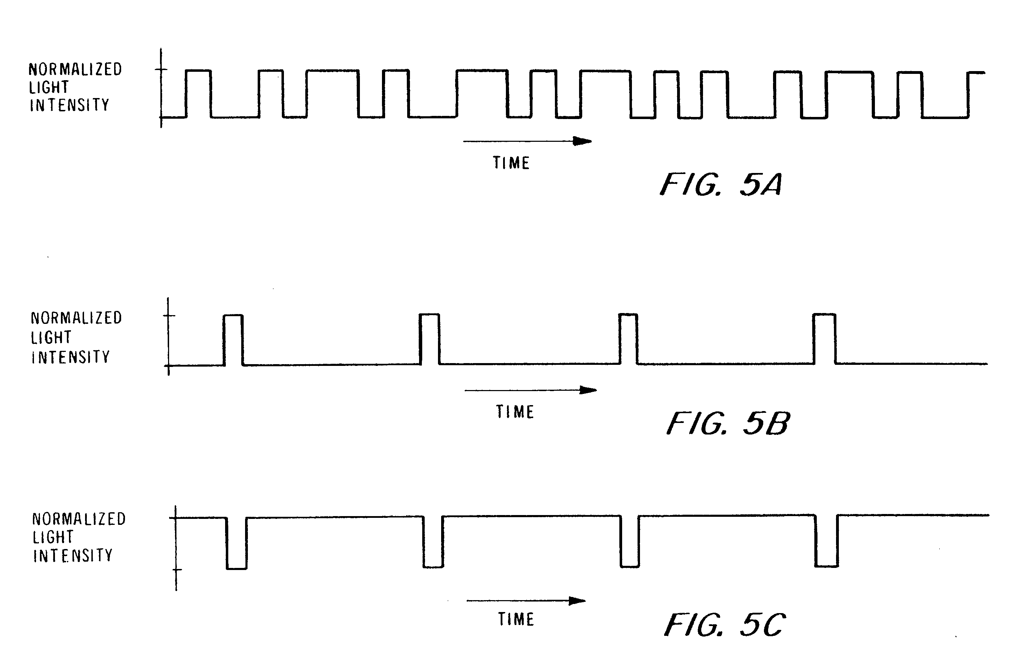

As shown in Figures 5A-5C, there suitably is a significant bit rate difference to uniquely distinguish packets and their preambles (collectively referred to herein as "packets" or "data packets") from the idle signal and the collision signal. For example, in the illustrated embodiment, packets (Figure 5A) are transmitted at 10Mbps, while idle and collision signals (figures 5B and 5C, respectively) are transmitted at only 2.5Mbps or so. A similar strategy could be employed to distinguish the idle and the collision signals from each other, but a more cost effective strategy is merely to invert the idle signal whenever a collision signal is required. Thus, the idle signal is selected to have a relatively high or, as shown in Figure 5B, a relatively low duty ratio, whereby it has a significantly different duty ratio from the complementary collision signal (Figure 5C), thereby providing a readily detectable distinction between those two signals.

B. The Control Units

Referring now to Figure 6, it will be seen that provision is made in the receive channel 53 of the control unit 33a for transferring packets from the transceiver 13a (Figure 4) to the cluster controller data bus 31 and for ensuring that the global status signal (idle, data or collision) carried by the cluster controller status bus 32 accurately accounts for the presence or absence of a transmission from the host 11a. To carry out those functions, the receive channel 53 comprises an optical receiver 71 for converting optical signals received from the transceiver 13a into corresponding electrical signals and for applying those signals to a normally disabled gate 72 and to a local status detector 73. The local status detector 73 determines whether a packet or an idle signal is being received and supplies a binary control signal ("data" or "idle"), whereby the gate 72 and the status bus driver 75 are actuated only when a packet is being received (i.e. in response to a "data" level control signal from the local status detector 73). Typically, a data bus driver 74 is coupled to the output of the gate 72 for applying the incoming packets to the data bus 31 of the control unit 33a. The status bus driver 75, on the other hand, suitably is a switched constant current source, whereby the current level applied to the status bus 32 is incrementally increased and decreased a predetermined amount of timed synchronism with the beginning and end, respectively, of each packet received from the transceiver 13a.

In practice, a packet length timer 76 may be provided to terminate any abnormally long packets coming from the transceiver 13a, thereby preventing the host 11a from retaining control of the LAN for an indefinite period of time in the event of a malfunction. To provide such override protection for the illustrated embodiment, the timer 76 is coupled between the output of the local status detector 73 and control inputs for the drivers 74 and 75. Moreover, the timer 76 is selected to have a time-out period which is somewhat longer than the maximum permissible packet time, so that it supplies an override signal for disabling the drivers 74 and 75 if the control signal from the local status detector 74 remains at a "data" level for an excessive period of time.

Focusing on the transmit channel 54 of the control unit 33a, it will be recalled that it is responsible for transmitting a packet, an idle signal, or a collision signal to the transceiver 13a. More particularly, a collision signal is transmitted to the transceiver 13a whenever a collision is detected, regardless of whether there is a packet on the data bus 31 or not. Conversely, in the absence of any collision, a packet or an idle signal is transmitted to the transceiver 13a, depending on whether there is a packet on the data bus 31 or not. To perform in accordance with those rules, the transmit channel 54 comprises a multiplexer 81, which has an inverting and a non-inverting mode of operation, for selectively coupling a receiver 82 or an idle signal generator 83 to an optical driver 84 under the control of a global status detector 85.

To enable the global status detector 85 to generate a trinary control signal ("idle," "data", or "collision") for the multiplexer/inverter 81, the status bus 32 is terminated in a characteristic impedance (not shown), so that it effectively sums the currents supplied by the status bus driver 75 and by the status bus drivers of the other control units 33b-33j and of the half repeater 35a (Figure 2). The global status detector 85, in turn, monitors the current level applied to the status bus 32 to provide (i) a global "idle" status signal if no data are being received by the control unit 33a from any source, (ii) a global "data" status signal if data are being received from only one source, or (iii) a global "collision" status signal if data are being received from two or more sources. In other words, the global status signal provided by the global status detector 85 is logically related to the local status signals generated by the control units 33a-33j and the half repeater 35a in accordance with the following rules:

| Local Status | Global Status |
|---|---|
| All idle | Idle |
| One data, all others idle | Data |
| Two or more data | Collision |

A global idle status signal from the global status detector 85 causes the multiplexer/inverter 81 to operate in its non-inverting mode while coupling the idle signal generator 83 to the optical driver 84, so that an idle signal is transmitted to the transceiver 13a. The idle signal generator 83 is also coupled to the optical driver 84 if there is a global collision status signal from the global status detector 85, but the multiplexer/inverter 81 operates in its inverting mode in response to such a status signal, so that a collision signal (i. e., inverted idle signal) is transmitted to the transceiver 13a. If, however, the global status detector 85 is providing a global data status signal, the multiplexer/inverter 81 switches to couple the receiver 82 to the optical driver 84 and operates in its non-inverting mode, so that the data appearing on the data bus 31 are then transferred to the transceiver 13a.

An optional self-test timer 88 is coupled between the local status detector 73 and the multiplexor inverter 81, so that the transceiver 13a receives a relatively brief burst of collision signal from the control unit 33a after the transmission of each data packet from the host 11a. The timer 88 pauses for a predetermined delay period whenever the status signal from the local status detector 73 reverts from a "data" status level to an "idle" status level and is then triggered to provide a simulated global collision status signal for the multiplexer/inverter 81, thereby causing a collision signal (i. e., an inverted idle signal) to be fed from the idle signal generator 83 to the optical driver 84 for transmission to the transceiver 13a. This collision signal is burst limited because the timer 88 times out a predetermined short time after it is triggered, but the burst allows the host 11a to check the reliability of its collision detection functions routinely, so that any malfunctions may be promptly identified and remedied

C. The Half Repeaters

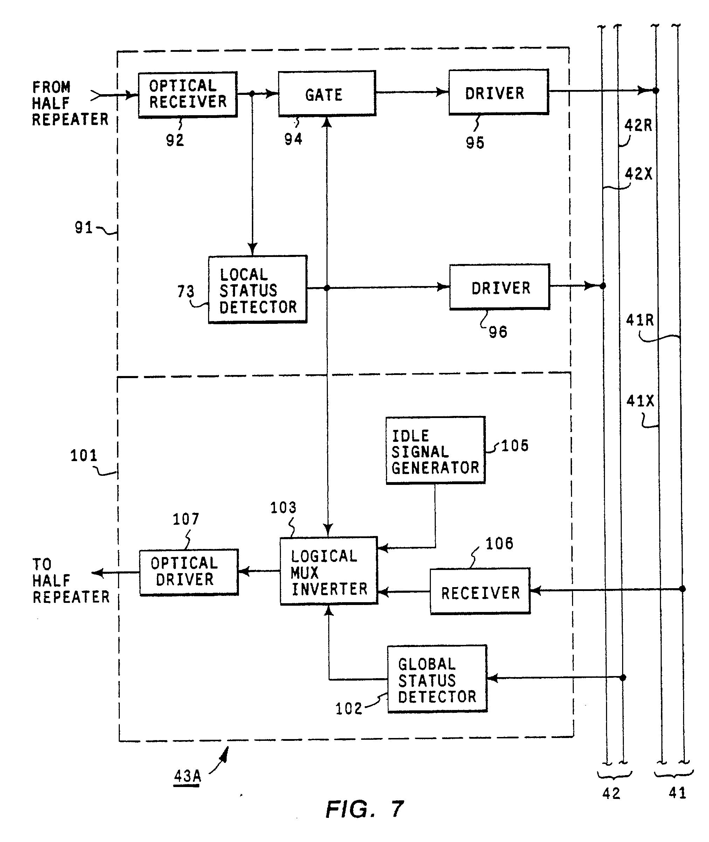

As shown in Fig 7, the half repeater 43a is similar in many respects to the control unit 33a, but there are a few important distinctions. One of the more important differences is that the half repeater 43a includes means for suppressing the circulation of redundant data and network control signals, but it should also be noted that the packet length timer 76 and the self-test timer 88 of the control unit 33a are not duplicated within the half repeater 43a because they specifically relate to the functional interaction between the hosts and the control units.

In operation, the half repeater 35a (Fig. 2) transmits an idle signal, a data packet, or a collision signal to the half repeater 43a. Those signals are transmitted to the half repeater 43a in optical form via the fiber optic link 23a (Fig. 1). To process the incoming signals, the receive channel 91 of the half repeater 43a comprises an optical receiver 92, a local status detector 93, a gate 94, a data bus driver 95 and a status bus driver 96. Those components function in generally the same manner as the corresponding components of the control unit 33a, except that (1) the local status detector 93 generates a trinary local control signal to indicate whether an idle signal, a data packet or a collision signal is being received and (2) the status bus driver 96 is not only actuated in response to a local data status signal to feed a predetermined amount of current into the status bus 42, but is also actuated in response to a local collision status signal to feed an incrementally increased amount of current into the status bus 42. Typically, the amount of current supplied by the status bus driver 96 in response to a local collision status signal is selected to be roughly twice as much current as it supplies in response to a local data status signal, so that the upper threshold for the global status detection function described hereinbelow may be set straightforwardly to reliably distinguish between a global data status condition and a global collision status condition.

Conversely, the transmit channel 101 of the half repeater 43a transmits an idle signal, a data packet, or a collision signal to the half repeater 35a (Fig. 2), depending on the local status signal supplied by the local status detector 93 and a global status signal supplied by a global status detector 102. To that end, a logical multiplexer/inverter 103 selectively couples an idle signal generator 105 or a receiver 106 to an optical driver 107 under the control of those status signals, so that (i) an idle signal is transferred from the idle signal generator 105 to the driver 107 if the local and global status signals are both at "idle", "data" or "collision" levels, (ii) a collision signal (i. e., an inverted idle signal) is transferred from the idle signal generator 105 to the driver 107 by virtue of the inverting mode of operation of the multiplexer/inverter 103 if a global "collision" status signal is provided concurrently with a local "idle" or "data" status signal, or (iii) a data packet is transferred from the data bus 41 (Fig. 3) to the driver 107 via the receiver 106 and the multiplexer/inverter 103 if a global "data" status signal is provided concurrently with a local "idle" signal. In summary it will be seen that the signal transmitted to the half repeater 35a is logically related to the local and global status signals provided by the status detectors 93 and 102, respectively, in accordance with the following rules:

| Local Status | Global Status | Signal Transmitted |
|---|---|---|
| Idle | Idle | Idle |
| Data | Data | Idle |
| Collision | Collision | Idle |
| Idle | Collision | Collision |
| Data | Collision | Collision |
| Idle | Data | Data |

Lake the global status detector 85 (Fig.6), the global status detector 102 monitors the current level applied to the status bus 42 (Fig. 3) to generate a trinary control signal ("idle", "data" or "collision") for the logical multiplexer/inverter 103. However, to achieve the echo suppression required to prevent the circulation of redundant information, the multiplexer/inverter 103 causes an idle signal to be transmitted to the half repeater 35a (Fig. 2) in lieu of a data or collision signal if the local and global status signals provided by the local and global status detectors 93 and 102, respectively, are concurrently both at "data" or both "collision" levels.

CONCLUSION

In view of the foregoing, it will be understood that the present invention provides a hierarchical star architecture which promotes the orderly and economical expansion and modification of a local area network as required to meet the needs of a growing and changing user community. Individual groups of host terminals may be networked independently of one another, or one or more N-channel distributed repeaters may be provided to merge them into an expanded, multi-node local area network. As will be appreciated, the repeater function is performed by half repeaters which are paired on a channel-by-channel basis to provide bidirectional communication links for unidirectionally transferring information from one node to another node of the extended network. Return echoes are suppressed by the half repeaters, thereby preventing unwanted oscillation of the network. Although it will be evident that fiber optic local area networks utilizing statistical contention network control advantageously are constructed in accordance with this invention, it should be understood that the broader aspects of the invention are not limited to such networks.

**Claims**

1. A multi-node local area network for networking a plurality of host terminals (11, 12), the network comprising
   at least two M-port star-configured nodes (15), where M = 1,2,... m, with m being an upper limit on M, and
   bidirectional transmission means (21,22) for coupling a first of the M-port nodes to one group of the terminals, and a second of the M-port nodes to another group of the terminals,
   characterised by
   at least one N-channel distributed repeater (18), where N = 1,2,... n, with n being an upper limit on N; each repeater channel including a pair of half repeaters (35,43) within different nodes of the network, and a bidirectional communications link for coupling the half repeaters to each other, with each of the half repeaters including means for suppressing return echoes, whereby each of the repeater channels links a pair of network nodes bidirectionally for transferring data between them unidirectionally.

2. The local area network of Claim 1, wherein each node of the network has a data bus (31) through which all incoming and outgoing data are routed, and the repeater channels link the data buses of the nodes bidirectionally to transfer data between the nodes unidirectionally.

3. The local area network of Claim 1 or 2, wherein each of the nodes includes means for transmitting a collision signal in lieu of data whenever data are being received from two or more sources; the repeater channels transfer any such collision signal unidirectionally between the nodes of the network, and the host terminals contend for control of the network, but are subject to being reset in response to the collision signal whenever they compete for control.

4. The local area network of any preceding claim, wherein the N-channel repeater has a single channel which is coupled between the data buses of the first and second M-port nodes, thereby providing a bidirectional repeatered link for transferring data between the data buses unidirectionally.

5. The local area network of Claim 2 or any claim dependent therefrom, whereinthe network includes at least one higher-level node, and the N-channel repeater has a plurality of channels, including first and second channels for coupling the data bus of the higher-level node to the data buses of the first and second M-port nodes, respectively, thereby providing a series of bidirectional repeatered communication links for transferring data between the data buses of the M-port nodes unidirectionally.

6. The local area network of Claim 2 or any claim dependent therefrom, wherein the network includes a plurality of higher-level nodes and a plurality of N-channel repeaters interconnected to provide a hierarchical series of bidirectional repeatered communication links for transferring data between the data buses of the M-port nodes unidirectionally.

7. The local area network of Claim 2 or any claim dependent therefrom, wherein the bidirectional transmission means includes a plurality of transceivers (13, 14) coupled to respective ones of the terminals; first and second groups of control units coupled to the data buses of the first and second M-port nodes, respectively, and bidirectional communication links for coupling the transceivers to respective ones of the control units.

8. The local area network of any preceding claim, wherein the communication links consist of or include fiber optic cables (210).

9. The local area network of any of Claims 1-7, wherein the communication links consist of, or include, metallic transmission lines.

10. The local area network of Claim 8 and/or 9, wherein the fiber optic cables have a maximum run length of 100m, and the metallic transmission lines are of 200m.

**Revendications**

1. Réseau local à noeuds multiples pour le fonctionnement en réseau d'une multitude de terminaux principaux (11, 12), le réseau comprenant :
   - au moins deux noeuds (15) configurés en étoile à M points d'accès, où M = 1,2, ... m, m étant la limite supérieure de M, et
   - un moyen de transmission bidirectionnelle (21, 22) pour accoupler un premier des noeuds à M points d'accès à un groupe de bornes, et un second des noeuds à M points d'accès à un autre groupe de bornes,
   caractérisé par :
   - au moins un répéteur (18) réparti à N canaux, où N = 1, 2, ... n, n étant une limite supérieure de N; chaque canal de répéteur comportant une paire de demi-répéteurs (35, 43) à l'intérieur de noeuds différents du réseau, et une liaison de communication bidirectionnelle pour accoupler les demi-répéteurs l'un à l'autre, avec chacun des demi-répéteurs comportant un moyen pour supprimer les échos de retour, à la suite de quoi chacun des canaux du répéteur relie une paire de noeuds du réseau de façon bidirectionnelle pour transférer des données entre eux de façon unidirectionnelle.

2. Réseau local selon la revendication 1, dans lequel chaque noeud du réseau comporte un bus de données (31) par l'intermédiaire duquel toutes les données d'entrée et de sortie sont acheminées, et les canaux du répéteur relient les bus de données des noeuds de façon directionnelle de manière à transférer les données entre les noeuds de façon unidirectionnelle.

3. Réseau local selon la revendication 1 ou 2, dans lequel chacun des noeuds comprend un moyen pour transmettre un signal de collision au lieu des données chaque fois que des données sont reçues qui proviennent de deux ou plusieurs sources; les canaux du répéteur transfèrent un tel signal de collision de manière unidirectionnelle entre les noeuds du réseau, et les terminaux principaux entrent en concurrence pour la commande du réseau, mais sont soumis à une remise à l'état initial en réponse au signal de collision chaque fois qu'ils entrent en compétition pour la commande.

4. Réseau local selon l'une quelconque des revendications précédentes, dans lequel le répéteur à N-canaux comporte un seul canal qui est couplé entre les bus de données des premier et second noeuds des M points d'accès, d'où la fourniture d'une liaison répétée bidirectionnelle pour le transfert des données entre les bus de données de manière unidirectionnelle.

5. Réseau local selon la revendication 2 ou l'une quelconque des revendications en dépendant, où le réseau comporte au moins un noeud de niveau haut, et le répéteur à N-canaux comporte une multitude de canaux, y compris des premier et second canaux pour accoupler le bus de données du noeud de niveau haut aux bus de données des premier et second noeuds à M points d'accès, respectivement, d'où la fourniture d'une série de liaisons de communication répétées bidirectionnelles pour le transfert des données entre le bus de données des noeuds à M points d'accès de manière unidirectionnelle.

6. Réseau local selon la revendication 2 ou l'une quelconque des revendications en dépendant, dans lequel le réseau comporte une multitude de noeuds de niveau haut et une multitude de répéteurs à N-canaux interconnectées pour fournir une série hiérarchique de liaisons de communication répétées bidirectionnelles pour le transfert de données entre les bus de données des noeuds à M points d'accès de façon unidirectionnelle.

7. Réseau local selon la revendication 2 ou l'une quelconque des revendications en dépendant, dans lequel le moyen de transmission bidirectionnelle comporte une multitude d'émetteurs-récepteurs (13, 14) accouplés à des bornes respectives parmi les bornes; des premier et second groupes d'unités de commande reliés aux bus de données des premier et second noeuds à M points d'accès, respectivement, et des liaisons de communication bidirectionnelle pour accoupler les émetteurs-récepteurs à des unités de commande respectives.

8. Réseau local selon l'une quelconque des revendications précédentes, dans lequel les liaisons de communication sont constituées ou comprennent des câbles à fibre optique (210)

9. Réseau local selon l'une quelconque des revendications 1-7, dans lequel les liaison de communication sont constituées, ou comprennent, des lignes de transmission métalliques.

10. Réseau local selon la revendication 8 et/ou la revendication 9, dans lequel les câbles à fibre optique ont une longueur maximum de 100 m, et les lignes métalliques de transmission sont de 200 m.

## Ansprüche

1. Ortsbereichsnetz mit mehreren Knoten zum Vernetzen mehrerer Wirts-Endgeräte (11,12) enthaltend:
   wenigstens zwei M-kanalige sternförmige Knoten (15), wobei M = 1,2,...m, wobei m eine obere Grenze auf M ist, und
   bidirektionale Übertragungseinrichtungen (21,22) zum Koppeln eines ersten der M-kanaligen Knoten mit einer Gruppe der Endgeräte und eines zweiten der M-kanaligen Knoten mit einer anderen Gruppe der Endgeräte,
   **gekennzeichnet durch**
   wenigstens einen N-kanaligen, verteilten Verstärker (18), wobei N = 1,2,...n, wobei n eine obere Grenze auf N ist; wobei jeder Verstärkerkanal ein Paar Halbverstärker (35,43) in unterschiedlichen Knoten des Netzwerks enthält und eine bidirektionale Übertragungsverbindung zum Koppeln der Halbverstärker miteinander, wobei jeder der Halbverstärker eine Einrichtung zum Unterdrücken von Rückechos enthält, wodurch jeder der Verstärkerkanäle ein Paar der Netzwerkknoten bidirektional zur uniderektionalen Übertragung von Daten zwischen ihnen verbindet.

2. Ortsbereichsnetz nach Anspruch 1, bei dem jeder Knoten des Netzes einen Datenbus (31) hat, durch den alle ankommenden und abgehenden Daten geleitet werden, und die Verstärkerkanäle die Datenbusse der Knoten bidirektional verbinden, um Daten zwischen den Knoten unidirektional zu Übertragen.

3. Ortsbereichsnetz nach Anspruch 1 oder 2, bei dem jeder der Knoten eine Einrichtung zum Übertragen eines Kollisionssignals anstelle von Daten aufweist, wenn Daten von zwei oder mehr Quellen empfangen werden; wobei die Verstärkerkanäle ein solches Kollisionssignal unidirektional zwischen den Knoten des Netzwerks übertragen und die Wirtsendgeräte sich um die Steuerung des Netzwerks bemühen, aber einer Rücksetzung in Abhängigkeit vom Kollisionssignal unterworfen sind, immer wenn sie bei der Steuerung konkurrieren.

4. Ortsbereichsnetz nach einem der vorhergehenden Ansprüche, wobei der N-kanalige Verstärker einen einzigen Kanal hat, der zwischen die Datenbusse der ersten und zweiten M-kanaligen Knoten geschaltet ist, um dadurch eine bidirektionale, verstärkte Verbindung zur unidirektionalen Übertragung von Daten zwischen den Datenbussen zu schaffen.

5. Ortsbereichsnetz nach Anspruch 2 oder einem davon abhängigen Anspruch, wobei das Netz wenigstens einen Knoten höheren Pegels aufweist und der N-kanalige Verstärker mehrere Kanäle aufweist, enthaltend erste und zweite Kanäle zum Koppeln des Datenbusses des Knotens höheren Pegels mit den Datenbussen der ersten und zweiten M-kanaligen Knoten, um dadurch jeweils eine Serie von bidirektionalen, verstärken Nachrichtenverbindungen zum unidirektionalen Übertragen von Daten zwischen den Da tenbussen der M-kanaligen Knoten zu schaffen.

6. Ortsbereichsnetz nach Anspruch 2 oder einem davon abhängigen Anspruch, wobei das Netz mehrere Knoten höheren Pegels und mehrere N-kanalige Verstärker enthält, die so zusammengeschaltet sind, daß sie eine hierarchische Serie von bidirektionalen, verstärken Übertragungsverbindungen zur unidirektionalen Übertragung von Daten zwischen den Datenbussen der M-kanaligen Knoten schaffen.

7. Ortsbereichsnetzwerk nach Anspruch 2 oder einem davon abhängigen Anspruch, bei dem die bidirektionale Übertragungseinrichtung mehrere Sendeempfänger (13,14) enthält, die jeweils mit den Endgeräten verbunden sind, und erste und zweite Gruppen von Steuereinheiten, die mit den Datenbussen der ersten und zweiten M-kanaligen Knoten verbunden sind, und mit bidirektionalen Nachrichtenverbindungen zum Koppeln der Sendeempfänger an die jeweils zugehörigen Steuereinheiten.

8. Ortsbereichsnetz nach einem der vorhergehenden Ansprüche bei dem die Nachrichtenverbindungen aus Faseroptikkabeln (210) bestehen oder solche enthalten.

9. Ortsbereichsnetz nach einem der Ansprüche 1 bis 7, bei dem die Übertragungsverbindungen aus metallischen Übertragungsleitungen bestehen oder solche enthalten. eitungen bestehen oder solche enchalten.

10. Ortsbereichsnetz nach Anspruch 8 und/oder 9, bei dem die faseroptischen Kabel eine maximale Lauflänge von 100 Metern haben und die metallischen Übertragungsleitungen solche von 200 Metern haben.

FIG. 1

FIG. 2

FIG. 3

FIG. 4

NORMALIZED
LIGHT
INTENSITY

TIME

*FIG. 5A*

NORMALIZED
LIGHT
INTENSITY

TIME

*FIG. 5B*

NORMALIZED
LIGHT
INTENSITY

TIME

*FIG. 5C*

EP 0 173 508 B1

FIG. 6

*FIG. 7*